(19) Europäisches Patentamt
European Patent Office
Office européen des brevets

(11)  **EP 3 823 794 B1**

(12)  **EUROPEAN PATENT SPECIFICATION**

(45) Date of publication and mention
of the grant of the patent:
**15.11.2023  Bulletin 2023/46**

(51) International Patent Classification (IPC):
**B25J 9/16** (2006.01)

(21) Application number: **19752104.0**

(22) Date of filing: **08.07.2019**

(52) Cooperative Patent Classification (CPC):
**B25J 9/1612;** B25J 9/1676; G05B 2219/37051;
G05B 2219/39487; G05B 2219/39496;
G05B 2219/39498; G05B 2219/39533;
G05B 2219/40202; G05B 2219/40627

(86) International application number:
**PCT/DK2019/050224**

(87) International publication number:
**WO 2020/015802 (23.01.2020 Gazette 2020/04)**

(54) **SAFE COLLABORATIVE GRIPPING DEVICE**

SICHERE KOLLABORATIVE GREIFVORRICHTUNG

DISPOSITIF DE PRÉHENSION COLLABORATIF SÛR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2018  DK PA201800394**

(43) Date of publication of application:
**26.05.2021  Bulletin 2021/21**

(73) Proprietor: **Onrobot A/S
5220 Odense SØ (DK)**

(72) Inventor: **KIEFFER, Lasse
5000 Odense C (DK)**

(74) Representative: **Andreasen, Søren Laursen
Vasegaard
Tropa ApS
Aagade 97, 1st Floor
8370 Hadsten (DK)**

(56) References cited:
DE-A1-102016 111 173      JP-A- H04 365 575
JP-A- 2018 015 854       US-A1- 2014 180 477

• **DELGADO ANGEL ET AL: "Adaptive tactile
control for in-hand manipulation tasks of
deformable objects", THE INTERNATIONAL
JOURNAL OF ADVANCED MANUFACTURING
TECHNOLOGY, SPRINGER, LONDON, vol. 91, no.
9, 9 February 2017 (2017-02-09), pages 4127-4140,
XP036289183, ISSN: 0268-3768, DOI:
10.1007/S00170-017-0046-2 [retrieved on
2017-02-09]**

## Description

### Field of invention

The present invention relates to a method for controlling a gripping device for a robot, e.g. a collaborative robot. The invention more particularly relates to an improved and safe method that can prevent injuries of humans that physically interact with the gripping device. The present invention also relates to gripping device configured to be attached to a robot, e.g. a collaborative robot.

### Prior art

An increasing number of industries have introduced application of robots due to the pressure to decrease costs, increase production accuracy, and achieve flexible manufacturing. The worldwide demand for cheaper products is one of the reasons that robots more and more frequently are introduced in new working areas. A specialised group of robots being referred to as collaborative robots, are robots intended to physically interact with humans in a shared workspace. When collaborative robots are applied for gripping and handling objects, a gripping device is typically applied.

A typical gripping device comprises a first gripping structure and a second gripping structure, wherein the first gripping structure and the second gripping structure are arranged to be moved towards and away from each other. These movements introduce a risk for injuries of the humans that physically interact with the robot and the gripping tool. Accordingly, it would be desirable to be able to have a method that eliminates the risk of injuries of humans that physically interact with the robot and the gripping tool.

JPH09225881A discloses a gripping tool (a manipulator) comprising a displacement sensor configured to detect the gripping amount of the gripping tool and control the gripping amount of the gripping tool on the basis of the sensor input. The gripping tool moreover comprises a slip sensor for detecting a slip amount between the gripping tool and an object gripped by the gripping tool. The gripping tool is configured to control the gripping amount on the basis of the slip sensor input. The gripper tool, however, introduces the risk for risk for injuries of humans that physically interact with the gripping tool.

DE3632151A1 discloses a programmable gripper system comprising a gripper and/or a rotary unit, with an integrated position sensor, angle sensor or force sensor. The gripper system is configured to limit the range of motion of the gripper on the basis of measurements made sensors. The gripper system, however, introduces the risk for risk for injuries of humans that physically interact with the gripping tool.

DE102016111173A1 discloses a Procedure for operating a gripping or Clamping device with at least one jaw movable in one direction of movement, and a gripping or gripping device arranged on the jaw, however the invention does not overcome the above mentioned disadvantages.

It is an object of the present invention to provide a method and a gripping device which reduces or even eliminates the risk for injuries of humans that physically interact with the robot and the gripping tool.

It is also an object of the present invention to provide a method and a gripping device which allows humans to physically interact with the gripping tool in a safe manner and at the same time provides a firm and controlled gripping of objects.

### Summary of the invention

The object of the present invention can be achieved by a method as defined in claim 1 and by a gripping device as defined in claim 11.

Preferred embodiments are defined in the dependent subclaims, explained in the following description and illustrated in the accompanying drawings.

The method according to the invention is a method for controlling a gripping device for a robot (e.g. a collaborative robot), wherein said gripping device comprises two or more gripping structures moveably arranged and being configured to grip an object, wherein the method comprises the step of restricting the displacement of the at least one of the two or more gripping structures so that said displacement is less than or equal to a predefined maximum displacement, wherein the method comprises the step of

a) detecting when at least one of gripping structures is in contact with the object and
b) increasing the force exerted by at least one of the two or more gripping structures to the object from a predefined first level to a predefined second level when it has been detected that at least one of the two or more gripping structures is in contact with the object the wherein the method further comprises the step of:
c) detecting when at least one of gripping structures has been in contact with the object in a predefined time period and
d) only increasing the force exerted by at least one of the two or more gripping structures to the object if at least one of the gripping structures has been in contact with the object in a time period being longer or equal to the predefined time period, wherein the predefined time period is at least 1ms.

Hereby, it is possible to provide a method which reduces or even eliminates the risk for injuries of the humans that physically interact with the robot and the gripping tool. The method according to the invention is a method for controlling a gripping device in order to minimise the risk for human injuries caused by the gripping device.

The method allows humans to physically interact with the gripping tool in a safe manner and at the same time provides a firm and controlled gripping of objects. The firm griping is provided by introducing the step of increasing the force exerted by at least one of the two or more gripping structures to the object when at least one of the two or more gripping structures is in contact with the object.

The two or more gripping structures may have any suitable size and geometry. In one embodiment, the method is a method for controlling a gripping device comprising a first gripping structure and the second gripping structure comprise parallel contact surfaces configured to be brought into contact with an object to be handled.

In one embodiment, the gripping device comprises a first gripping structure and a second gripping structure arranged to be moved towards and away from each other. This may preferably be done by using electric, pneumatic or hydraulic actuators. The actuators may preferably be controlled by a control unit.

In one embodiment, the gripping device comprises a single moveably arranged gripping structure and a second passive gripping structure, wherein the moveably arranged gripping structure is configured to be moved relative to the passive gripping structure.

In one embodiment, the gripping device comprises a first gripping structure, a second griping structure and a third gripping structure arranged to be moved towards and away from each other. This may preferably be done by using electric, pneumatic or hydraulic actuators.

The method comprises the step of actively restricting the displacement of at least one of the two or more gripping structures so that said displacement is less than or equal to a predefined maximum displacement. Hereby, by selecting the maximum displacement according to the properties of human tissue, injuries can be prevented, because the gripping structures will not compress a finger or another part of a human to an extent that is critical. The maximum displacement may be selected to be so small that a finger or another part of a human can resist the compression of the gripping structures without sustaining any damage at all.

By the term "actively restricting the displacement" is meant that an active control is carried out so that the displacement is entirely controlled by the activation (or change of activation) of one or more activators applied to move the first gripping structure and/or the second gripping structure. This means that a restriction caused by the rigidity of the mechanical structures provided between the gripping structures, is not within the definition of "restricting the displacement". By "actively restricting the displacement" the activation of the one or more activators is preferably carried out on the basis of a control signal. The control signal may be provided by using a detection unit and/or one or more sensors configured to detect contact between the object and the first gripping structure and/or the second gripping structure.

The method comprises the step of detecting when at least one of the two or more gripping structures is in contact with the object. The detection of contact can be achieved by using various detection methods.

It is possible to receive information from an external device, wherein the contact detection is provided by using said external device. The detection device may be of any suitable type.

The method comprises the step of increasing the (e.g. compressive) force exerted by at least one of the two or more gripping structures to the object, when at least one of the two or more gripping structures is in contact with the object. Hereby, it is possible to get a firm grip of the object to be gripped/handled by the gripping device. Moreover, it is possible to generate a normal force sufficiently large to achieve a friction force that is large enough to hold the object.

In one embodiment, the predefined maximum displacement is less than 5 mm. In one embodiment, the predefined maximum displacement is less than 2 mm. In one embodiment, the predefined maximum displacement is selected to be equal to or less than 1 mm. In one embodiment, the predefined maximum displacement is selected to be equal to or less than 0.5 mm. In one embodiment, the predefined maximum displacement is selected to be equal to or less than 0.25 mm. In one embodiment, the predefined maximum displacement is selected to be equal to or less than 0.01 mm. In one embodiment, the predefined maximum displacement is selected to be equal to or less than 0.05 mm. Hereby the risk for damaging human tissue is eliminated. Said risk can be eliminated even when the force exerted by at least one of the two or more gripping structures is to the object is increased from a predefined first level to a predefined second very high level.

In one embodiment, the ratio between the predefined second level and the predefined first level is at least 2.0.

This can be expressed mathematically in the following way:

$$(1) \quad \frac{F_2}{F_1} \geq 2$$

In one embodiment, the ratio between the predefined second level and the predefined first level is at least 4. In one embodiment, the ratio between the predefined second level and the predefined first level is at least 8. In one embodiment, the ratio between the predefined second level and the predefined first level is at least 10. In one embodiment, the ratio between the predefined second level and the predefined first level is at least 25. In one embodiment, the ratio between the predefined second level and the predefined first level is at least 50. In one embodiment, the ratio between the predefined second level and the predefined first level is at least 100. In one embodiment, the ratio between the predefined second level and the predefined first level is at least 150. In one embodiment, the ratio between the predefined second level and the predefined first level is at least 200. In one embodiment, the ratio between the predefined second level and the predefined first level is at least 500. In one embodiment, the ratio between the predefined second level and the predefined first level is at least 1000.

In one embodiment, the method comprises the step increasing the force from the predefined first level to the predefined second level basically linearly as function of the displacement of at least one of the two or more gripping structures.

In one embodiment, the method comprises the step of increasing the force from the predefined first level to the predefined second level during a force increasing time period being less than 500 ms.

In one embodiment, the method comprises the step of increasing the force from the predefined first level to the predefined second level during a force increasing time period being less than 400 ms.

In one embodiment, the method comprises the step of increasing the force from the predefined first level to the predefined second level during a force increasing time period being less than 300 ms.

In one embodiment, the method comprises the step of increasing the force from the predefined first level to the predefined second level during a force increasing time period being less than 200 ms.

In one embodiment, the method comprises the step of increasing the force from the predefined first level to the predefined second level during a force increasing time period being less than 100 ms.

In one embodiment, the method comprises the step of increasing the force from the predefined first level to the predefined second level during a force increasing time period being less than 75 ms.

In one embodiment, the method comprises the step of increasing the force from the predefined first level to the predefined second level during a force increasing time period being less than 50 ms.

In one embodiment, the method comprises the step of increasing the force from the predefined first level to the predefined second level during a force increasing time period being less than 25 ms.

In one embodiment, the method comprises the step of increasing the force from the predefined first level to the predefined second level during a force increasing time period being less than 10 ms.

In one embodiment, the method comprises the step of increasing the force from the predefined first level to the predefined second level during a force increasing time period being less than 5 ms.

In one embodiment, the method comprises the step of increasing the force from the predefined first level to the predefined second level during a force increasing time period being less than 2 ms.

In one embodiment, the method comprises the step of increasing the force from the predefined first level to the predefined second level during a force increasing time period being less than 1 ms.

In one embodiment, the method comprises the step of increasing the force from the predefined first level to the predefined second level during a force increasing time period being less than 0.5 ms.

In one embodiment, the method comprises the step of increasing the force from the predefined first level to the predefined second level during a force increasing time period being less than 0.1 ms.

By increasing the force from the predefined first level to the predefined second level during a short force increasing time period it is possible to ensure that object is gripped and maintained in the griped position. If the force increasing time period is too long, it would introduce a risk for the object slipping out of the gripping device.

It is an advantage that the method comprises the step of:

c) detecting when at least one of gripping structures has been in contact with the object in a predefined time period and
d) only increasing the force exerted by at least one of the two or more gripping structures to the object if at least one of the gripping structures has been in contact with the object in a time period being longer or equal to the predefined time period.

Hereby, the risk for incorrectly detecting contact between the object and at least one of gripping structures can be eliminated. If, one or more of the gripping structures has been in contact with the object in a very short time period, the contact detection may be erroneous and thus be a fallacy. Accordingly, requiring that at least one of gripping structures must have been in contact with the object in a time period being longer or equal to the predefined time period eliminates the risk for detect a contact by mistake.

In a preferred embodiment, the predefined time period is 1ms.

In one embodiment, the predefined time period is 2 ms.

In one embodiment, the predefined time period is 4 ms.

In one embodiment, the predefined time period is 10 ms.

In one embodiment, the predefined time period is 20 ms.

In one embodiment, the predefined time period is 50 ms.

In one embodiment, the predefined time period is 100 ms.

In one embodiment, the predefined time period is 150 ms.

In one embodiment, the predefined time period is 200 ms.

In one embodiment, the predefined time period is 300 ms.

In one embodiment, the predefined time period is 500 ms.

In one embodiment, the predefined time period is 750 ms.

In one embodiment, the predefined time period is 1000 ms.

In one embodiment, the predefined time period is 2s.

In one embodiment, the predefined time period is 5 s.

In one embodiment, the predefined time period is 10s.

In one embodiment, the detection of when at least one of the gripping structures is in contact with the object is carried out by measuring a pressure with which at least one of the two or more gripping structures presses against the object, wherein said pressure is measured by means of a detection unit comprises one or more sensor members, wherein contact between the object and at least one of gripping structures is defined as when the pressure exceeding a predefined pressure level is detected.

In one embodiment, contact is defined to occur when the average pressure detected by the pressure sensing sensor members exceeds a predefined upper pressure level.

In one embodiment, contact is defined to occur when the average pressure detected by a predefined number of pressure sensing sensor members exceeds the predefined upper pressure level. In one embodiment, the number of pressure sensing sensor members may be 1-5. In one embodiment, the number of pressure sensing sensor members may be 5-10. In one embodiment, the number of pressure sensing sensor members may be 10-20. In one embodiment, the number of pressure sensing sensor members may be 20-50. In one embodiment, the number of pressure sensing sensor members may be more than 50.

Hereby, the sensor members can be used to detect contact in a reliable manner.

In one embodiment, the method comprises the step of:

> a) initially letting the two or more gripping structures move without restricting their relative displacement with respect to each other as long as none of the gripping structures are in contact with the object.

Hereby, the two or more gripping structures can move "freely" (without displacement restrictions) relative to each other as long as none of the gripping structures are provided in a distance from the object. Furthermore, when contact is detected the displacement is restricted so that tissue damage can be avoided.

It may be beneficial that the method comprises the step of controlling the magnitude of the pressure, with which at least one of the two or more gripping structures presses against the object. Hereby, it is possible to avoid that a too high or too low pressure is provided between at least one of the two or more gripping structures and the object. Accordingly, it can be ensured that a sufficiently large friction force is provided during lifting tasks.

It may be advantageous that the method comprises the step of detecting at least one parameter indicative of the pressure or force, with which at least one of the two or more gripping structures presses against the object. Hereby, it is possible to determine if the pressure should be increased (in order to achieve a sufficiently high friction force) or if the pressure should be reduced.

It may be an advantage that the method comprises the step of measuring a current and/or a voltage and/or a force of an actuator arranged to drive at least one of the two or more gripping structures, wherein the contact with an object is defined on the basis of the measured current and/or a voltage and/or force. Hereby, it is possible to apply simple electric measurements to detect contact. Accordingly, a simply, cheap and reliable method can be provided.

It may be advantageous that the method comprises the step of applying one or more sensors to detect the the contact with the object. Hereby, it is possible to provide reliable information to be used to detect contact.

The gripping device according to the invention is a gripping device for a robot, said gripping device comprising:

- two or more gripping structures moveably arranged relative to each other and being configured to grip an object;
- a detection unit configured to detect when an object is in contact with at least one of the two or more gripping structures,
- one or more actuators configured to make at least one of the two or more gripping structures move to grip the object,
- a control unit configured to control the one or more actuators,

wherein the control unit is configured to restrict the displacement of at least one of the two or more gripping structures so that said displacement is less than or equal to a predefined maximum displacement, wherein the gripping device is configured to increase the force exerted by at least one of the two or more gripping structures to the object from a predefined first level to a predefined second higher level when the detection unit has been detected that at least one of the two or more gripping structures is in contact with the object.

Hereby, it is possible to provide a method which reduces or even eliminates the risk for injuries of the humans that physically interact with the robot and the gripping tool. The gripping device allows humans to physically interact with the gripping tool in a safe manner and at the same time provides a firm and controlled gripping of objects. By increasing the force exerted by at least one of the two or more gripping structures to the object when at least one of the two or more gripping structures is in contact with the object, it is possible to provide a firm griping by using the gripping device.

In a preferred embodiment, the wherein the control unit is configured to restrict the displacement of all gripping structures so that said displacement is less than or equal to a predefined maximum displacement.

The first gripping structures may have any suitable size and geometry. The gripping device may be configured to be used together with a collaborative robot.

In one embodiment, the predefined maximum displacement is within the range 0.1-1.0 mm such as 0.2-0.5 mm. In one embodiment, the predefined maximum displacement is equal to or less than 5 mm. In one embodiment, the predefined maximum displacement is equal to or less than 2 mm. In one embodiment, the predefined maximum displacement is equal to or less than 1 mm. In one embodiment, the predefined maximum displacement is equal to or less than 0.5 mm. In one embodiment, the predefined maximum displacement is equal to or less than 0.2 mm. In one embodiment, the predefined maximum displacement is equal to or less than 0.1 mm. In one embodiment, the predefined maximum displacement is equal to or less than 0.05 mm. By restricting the maximum displacement, the risk for damaging human tissue can be eliminated.

In one embodiment, the ratio between the predefined second higher level and the predefined first level is at least 2.0. In one embodiment, the ratio between the predefined second level and the predefined first level is at least 4. In one embodiment, the ratio between the predefined second level and the predefined first level is at least 8. In one embodiment, the ratio between the predefined second level and the predefined first level is at least 10. In one embodiment, the ratio between the predefined second level and the predefined first level is at least 25. In one embodiment, the ratio between the predefined second level and the predefined first level is at least 50. In one embodiment, the ratio between the predefined second level and the predefined first level is at least 100. In one embodiment, the ratio between the predefined second level and the predefined first level is at least 150. In one embodiment, the ratio between the predefined second level and the predefined first level is at least 200. In one embodiment, the ratio between the predefined second level and the predefined first level is at least 500. In one embodiment, the ratio between the predefined second level and the predefined first level is at least 1000.

In one embodiment, the gripping device is configured to increase the force from the predefined first level to the predefined second level basically linearly as function of the displacement of at least one of the two or more gripping structures.

In one embodiment, the gripping device is configured to increase the force from the predefined first level to the predefined second level during a force increasing time period being less than 500 ms.

In one embodiment, the gripping device is configured to increase the force from the predefined first level to the predefined second level during a force increasing time period being less than 400 ms.

In one embodiment, the gripping device is configured to increase the force from the predefined first level to the predefined second level during a force increasing time period being less than 300 ms.

In one embodiment, the gripping device is configured to increase the force from the predefined first level to the predefined second level during a force increasing time period being less than 200 ms.

In one embodiment, the gripping device is configured to increase the force from the predefined first level to the predefined second level during a force increasing time period being less than 100 ms.

In one embodiment, the gripping device is configured to increase the force from the predefined first level to the predefined second level during a force increasing time period being less than 75 ms.

In one embodiment, the gripping device is configured to increase the force from the predefined first level to the predefined second level during a force increasing time period being less than 50 ms.

In one embodiment, the gripping device is configured to increase the force from the predefined first level to the predefined second level during a force increasing time period being less than 25 ms.

In one embodiment, the gripping device is configured to increase the force from the predefined first level to the predefined second level during a force increasing time period being less than 10 ms.

In one embodiment, the gripping device is configured to increase the force from the predefined first level to the predefined second level during a force increasing time period being less than 5 ms.

In one embodiment, the gripping device is configured to increase the force from the predefined first level to the predefined second level during a force increasing time period being less than 2 ms.

In one embodiment, the gripping device is configured to increase the force from the predefined first level to the predefined second level during a force increasing time period being less than 1 ms.

In one embodiment, the gripping device is configured to increase the force from the predefined first level to the predefined second level during a force increasing time period being less than 0.5 ms.

In one embodiment, the gripping device is configured to increase the force from the predefined first level to the predefined second level during a force increasing time period being less than 0.1 ms.

By increasing the force from the predefined first level to the predefined second level during a short force increasing time period it is possible to ensure that object is gripped and maintained in the griped position. If the force increasing time period is too long, it would introduce a risk for the object slipping out of the gripping device.

In one embodiment, the detection unit is configured to detect when at least one of the gripping structures has been in contact with the object in a predefined time period, wherein the control unit is configured to only increasing the force exerted by at least one of the two or more gripping structures to the object if at least one of gripping structures has been in contact with the object in a time period being longer or equal to the predefined time period.

Hereby, the risk for incorrectly detecting contact between the object and at least one of gripping structures can be eliminated. If, one or more of the gripping structures has been in contact with the object in a very short time period, the contact detection may be erroneous and thus be a fallacy. Accordingly, requiring that at least one of gripping structures must have been in contact with the object in a time period being longer or equal to the predefined time period eliminates the risk for detect a contact by mistake.

In one embodiment, the predefined time period is 1ms.

In one embodiment, the predefined time period is 2 ms.

In one embodiment, the predefined time period is 4 ms.

In one embodiment, the predefined time period is 10 ms.

In one embodiment, the predefined time period is 20 ms.

In one embodiment, the predefined time period is 50 ms.

In one embodiment, the predefined time period is 100 ms.

In one embodiment, the predefined time period is 150 ms.

In one embodiment, the predefined time period is 200 ms.

In one embodiment, the predefined time period is 300 ms.

In one embodiment, the predefined time period is 500 ms.

In one embodiment, the predefined time period is 750 ms.

In one embodiment, the predefined time period is 1000 ms.

In one embodiment, the predefined time period is 2s.

In one embodiment, the predefined time period is 5 s.

In one embodiment, the predefined time period is 10s.

In one embodiment, the detection of when at least one of the gripping structures is in contact with the object is carried out by measuring a pressure with which at least one of the two or more gripping structures presses against the object, wherein said pressure is measured by means of a detection unit comprises one or more sensor members, wherein contact between the object and at least one of gripping structures is defined as when the pressure exceeding a predefined pressure level is detected.

In one embodiment, contact is defined to occur when the average pressure detected by the pressure sensing sensor members exceeds a predefined upper pressure level.

In one embodiment, contact is defined to occur when the average pressure detected by a predefined number of pressure sensing sensor members exceeds the predefined upper pressure level. In one embodiment, the number of pressure sensing sensor members may be 1-5. In one embodiment, the number of pressure sensing sensor members may be 5-10. In one embodiment, the number of pressure sensing sensor members may be 10-20. In one embodiment, the number of pressure sensing sensor members may be 20-50. In one embodiment, the number of pressure sensing sensor members may be more than 50. Hereby, the sensor members can be used to detect contact in a reliable manner.

In one embodiment, the gripping device is configured to initially letting the two or more gripping structures move without restricting their relative displacement with respect to each other as long as none of the gripping structures are in contact with the object.

Hereby, the two or more gripping structures can move "freely" (without displacement restrictions) relative to each other as long as none of the gripping structures are provided in a distance from the object. Furthermore, when contact is detected the displacement is restricted so that tissue damage can be avoided.

In one embodiment, the gripping device is configured to control the magnitude of the pressure, with which at least one of the two or more gripping structures presses against the object. Hereby, it is possible to avoid that a too high or too low pressure is provided between at least one of the two or more gripping structures and the object. Accordingly, it can be ensured that a sufficiently large friction force is provided during lifting tasks.

It may be advantageous that the gripping device is configured to detect at least one parameter indicative of the pressure or force, with which at least one of the two or more gripping structures presses against the object. Hereby, it is possible to determine if the pressure should be increased (in order to achieve a sufficiently high friction force) or if the pressure should be reduced.

It may be an advantage that the gripping device is configured to measure a current and/or a voltage and/or a force of an actuator arranged to drive at least one of the two or more gripping structures, wherein the contact with an object is defined on the basis of the measured current and/or a voltage and/or force. Hereby, it is possible to apply simple electric measurements to detect contact. Accordingly, a simply, cheap and reliable method can be provided.

It may be advantageous that the method comprises the step of applying one or more sensors to detect the the contact with the object. Hereby, it is possible to provide reliable information to be used to detect contact.

In one embodiment, the gripping device comprises an integrated detection unit configured to detect when the object is in contact with at least one of the two or more gripping structures on the basis of measurements performed on one or more of the actuators, wherein the control unit is configured to restrict the displacement of at least one of the two or more gripping structures when the integrated detection unit has detected that the object is in contact with at least one of the two or more gripping structures.

In one embodiment, the gripping device comprises a first gripping structure and a second gripping structure arranged to be moved towards and away from each other. In one embodiment, both the first gripping structure and the second gripping structure are moveably arranged. In another embodiment, either the first gripping structure or the second gripping structure is moveably arranged, wherein the other one is fixed.

The detection unit is configured to detect when an object is in contact with at least one of the one or more gripping structures. The detection unit may be of any suitable type and size.

In one embodiment, the one or more actuators are electrically driven.

In another embodiment, the one or more actuators are pneumatically driven.

In a further embodiment, the one or more actuators are hydraulically driven.

The actuators are configured to make at least one of the one or more gripping structures move (e.g. towards each other).

In one embodiment, the actuators are configured to make at least one of the one or more gripping structures move (e.g. towards each other, e.g. by moving both a first gripping structure and/or a second gripping structure).

In another embodiment, a single actuator is used to move either a first gripping structure or a second gripping structure towards the other by moving only one of the gripping structures, wherein the other gripping structures is fixed.

The control unit is configured to control the one or more actuators in a manner in which the displacement of at least one of the one or more gripping structures is restricted in such a manner that the displacement is less than or equal to a predefined maximum displacement.

By restricting the displacement of at least one of the the one or more gripping structures so that said displacement is less than or equal to a predefined maximum displacement, injuries can be prevented.

By the term "actively restricting the displacement" is meant that an active control is carried out so that the displacement is entirely controlled by the activation of one or more activators applied to move the first gripping structure and/or the second gripping structure.

This means that a restriction caused by the rigidity of the mechanical structures provided between the gripping structures, is not within the definition of "restricting the displacement". By "actively restricting the displacement" the activation of the one or more activators is preferably carried out on the basis of a control signal. The control signal may be provided by using a detection unit and/or one or more sensors configured to detect contact between the object and the first gripping structure and/or the second gripping structure.

In a preferred embodiment, the maximum displacement is selected according to predefined properties of human tissue (e.g. the skin and the subcutaneous tissue). The maximum displacement is preferably selected to be so small that a finger or another part of a human can resist the compression of the gripping structures without sustaining any damage at all. Injuries can be prevented because the gripping structures will not compress a finger or another part of a human to an extent that is critical for human tissue.

It may be advantageous that the gripping device comprises a detection unit configured to detect when an object is in contact with at least one of the one or more gripping structures on the basis of measurements performed on one or more of the actuators and that the control unit is configured to restrict the displacement of at least one of the one or more structures when the integrated detection unit has detected that the object is in contact with at least one of the one or more gripping structures. The detection unit may be an integrated detection unit.

Hereby, it is possible to provide a simple, cheap and reliable gripping device.

It may be an advantage that the detection unit comprises one or more sensor members. Hereby, the sensor members can be used to detect contact in a reliable manner.

In one embodiment, the one or more sensor members are pressure sensitive sensor members.

It may be beneficial that the control unit is configurable so that the predefined maximum displacement and/or the predefined level can be set.

The setting may be carried out by using an external device (e.g. a tablet, a smartphone or a computer) that is configured to communicate with the control unit.

In one embodiment, the gripping device is configurable by using a human machine interface (e.g. a touch screen) being an integrated part of the gripping device.

In a preferred embodiment, the control unit is configured to initially let the two or more gripping structures move without restricting their relative displacement (with respect to each other) as long as none of the gripping structures are in contact with the object.

In a preferred embodiment, the control unit is configured to detect when at least one of gripping structures is in contact with the object and restrict the displacement of at least one of the two or more gripping structures when it has been detected that at least one of gripping structures is in contact with the object.

In a preferred embodiment, the control unit is configured to increase the force exerted by at least one of the gripping structures to the object when it has been detected that the at least one of the two or more gripping structures is in contact with the object.

Hereby, it is possible to increase the normal force and thus the friction force and thus provide a firm grip of the object.

## Description of the Drawings

The invention will become more fully understood from the detailed description given herein below. The accompanying drawings are given by way of illustration only, and thus, they are not limitative of the present invention. In the accompanying drawings:

Fig. 1A      shows a side view of a perspective view of a gripping device according to the invention in a first configuration;

Fig. 1B      shows a perspective view of the gripping device shown in Fig. 1A in a second configuration;

Fig. 1C      shows a close-up view of the gripping device shown in Fig. 1A and Fig. 1B in a third configuration;

Fig. 2       shows a close-up view of a gripping device according to the invention;

Fig. 3A      shows a graph depicting the force exerted by the gripping device as function of the displacement of the gripping structures relative to each other in one embodiment of the invention;

Fig. 3B      shows a graph depicting the force exerted by the gripping device as function of the displacement of the gripping structures relative to each other in another embodiment of the invention;

Fig. 4A      shows a side view of a gripping structure of a gripping device according to the invention;

Fig. 4B      shows a front-view of a pressure sensor;

Fig. 4C      shows a graph depicting the pressure distribution along a line (row) of pressure sensing elements of the pressure sensor shown in Fig. 4B;

Fig. 5       shows a cross-sectional view of a gripping device according to the invention;

Fig. 6       shows a gripping device according to the invention being attached to a collaborative robot;

Fig. 7A      shows a top view of a gripping device according to the invention, wherein the gripping device is operated in a mode in which the gripping structures are not in contact with the object to be handled, in which mode the gripping structures are moved without restricting their relative displacement with respect to each other;

Fig. 7B      shows a top view of the gripping device shown in Fig. 7A, in a configuration in which there is contact between the object and the gripping structures;

Fig. 8A      shows a top view of a gripping device according to the invention comprising two gripping structures each connected to a connection member that is rotatably attached to an actuator;

Fig. 8B      shows a gripping device according to the invention configured to grip a tubular structure in a first configuration and

Fig. 8C      shows the gripping device shown in Fig. 8B in another configuration.

## Detailed description of the invention

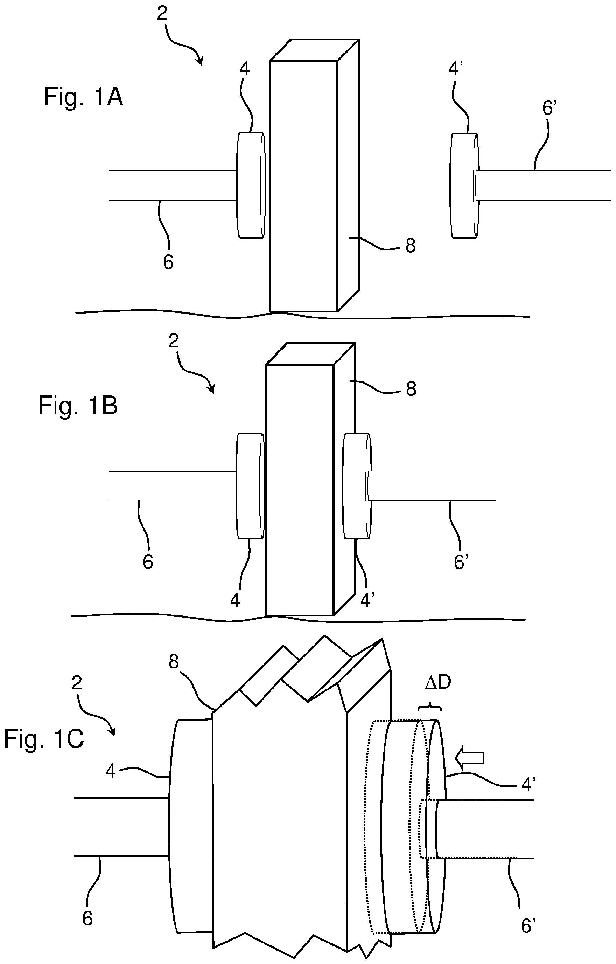

Referring now in detail to the drawings for the purpose of illustrating preferred embodiments of the present invention, a portion of a gripping device 2 of the present invention is illustrated in Fig. 1A. Fig. 1A illustrates a perspective view of a gripping device 2 according to the invention in a first configuration, in which a first gripping structure 4 and a second gripping structure 4' of the gripping device 2 are moved toward each other in order to grip an object 8 arranged there between. The first gripping structure 4 is provided in the distal end of a first rod-shaped connection member 6. Likewise, the second gripping structure 4' is provided in the distal end of a second rod-shaped connection member 6'.

The gripping device 2 comprises one or more actuators (not shown) configured to move the gripping structures 4, 4' towards each other and away from each other by moving at least one of the connection members 6, 6'.

Fig. 1B illustrates a perspective view of a portion of the gripping device 2 shown in Fig. 1A in a second configuration, in which the gripping structures 4, 4' have been moved further towards each other.

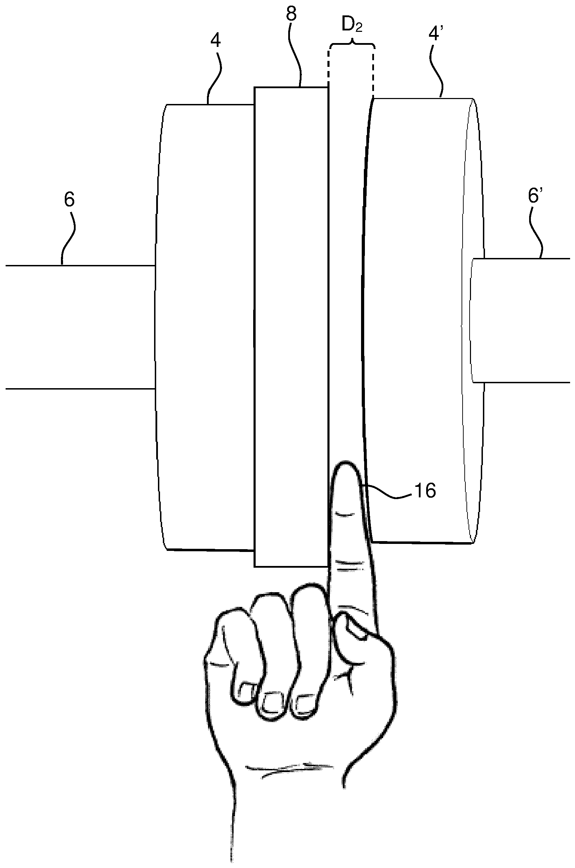

Fig. 1C illustrates a close-up view of the gripping device 2 shown in Fig. 1A and Fig. 1B in a third configuration, in which the first gripping structure 4 has been brought into contact with the object 8.

The contact triggers the control unit (not shown) of the gripping device 2 to restrict the displacement $\Delta D$ of the the first gripping structure 4 relative to the second gripping structure 4'. Accordingly, the gripping device 2 is operated in a manner in, which the displacement $\Delta D$ is less than or equal to a predefined maximum displacement, $\Delta D_{max}$. In one embodiment, the predefined maximum displacement, $\Delta D_{max}$ is within the range 0.1-1.0 mm such as 0.2-0.5 mm.

The initial position (before the displacement of the first gripping structure 4 relative to the second gripping structure 4') is indicated with a solid line, whereas the end position (when the first gripping structure 4 has been moved towards the second gripping structure 4') is indicated with a dotted line.

Fig. 2 illustrates a close-up view of a portion of a gripping device 2 according to the invention. The gripping device 2 comprises two parallel connection members 6, 6' that each carries a disc-shaped gripping structure 4, 4' provided in the distal end. An object 8 is arranged between the first gripping structures 4 and the second gripping structure 4'.

A finger 16 of a human is arranged between the object 8 and the second gripping structure 4'. When the gripping device 2 detects that there is contact with the finger 16 and the second gripping structure 4', this detected contact triggers the control unit (not shown) of the gripping device 2 to restrict the displacement of the the first gripping structure 4 relative to the second gripping structure 4'.

Accordingly, the gripping device 2 is operated in a manner in which the distance $D_2$ between the object and the second gripping structure 4' is restricted. Accordingly, the gripping device 2 is configured to prevent the finger from being injured by the compressive force exerted to the finger by the gripping structures 4, 4' or the object 8 and one of the gripping structures 4, 4'.

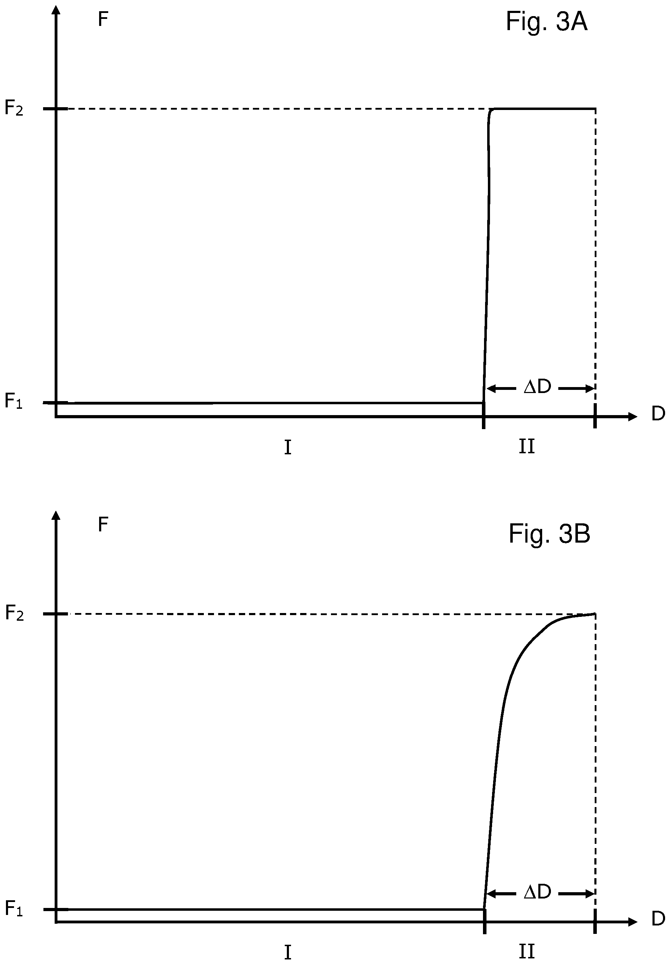

Fig. 3A illustrates a graph depicting the force F exerted by the gripping device as function of the displacement D of the gripping structures relative to each other in one embodiment of the invention. In the initial phase I, the gripping structures are moved towards each other and the force $F_1$ exerted by the gripping structures is very low (close to zero). When contact with an object is reached (in phase II) by either the first gripping structure or the second gripping structure, the force $F_2$ exerted by the gripping structures (towards the object) is increased almost instantaneously to a high level (indicated with a dotted line). This highlevel force $F_2$ is sufficiently large to achieve a reaction force (normal force) required to provide a friction force of sufficient magnitude to maintain a firm grip of the object.

It can be seen that the displacement $\Delta D$ in the second phase II is limited. Thus, the gripping structures are restricted from injuring a finger or another part of a human that is brought into contact with one of the gripping structures.

Fig. 3B illustrates a graph depicting the force F exerted by the gripping device as function of the displacement D of the gripping structures relative to each other in another embodiment of the invention. In the initial phase I the gripping structures are moved towards each other and the force $F_1$ exerted by the gripping device is very low. However, when contact with an object is reached (in phase II) by either the first gripping structure or the second gripping structure, the force $F_2$ exerted by the gripping device (towards the object) is ramped up to a high level (indicated with a dotted line).

As the displacement $\Delta D$ in the second phase II is limited (restricted), the gripping device is restricted from injuring a finger or another part of a human that is brought into contact with one of the gripping structures of the gripping device.

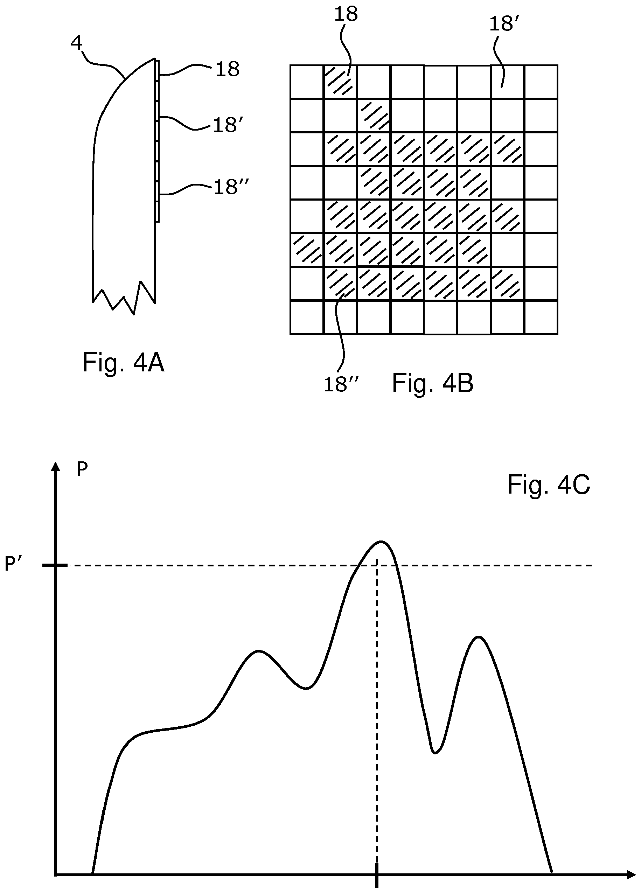

Fig. 4A illustrates a side view of a gripping structure 4 of a gripping device according to the invention. The gripping structure 4 comprises a gripping surface provided with a sensor comprising a plurality of sensor members 18, 18', 18" each configured to measure pressure.

Fig. 4B illustrates a front-view of a pressure sensor of the type that basically corresponds to the one shown in Fig. 4A. The pressure sensor, however, comprises more sensor members 18, 18', 18" each configured to measure pressure.

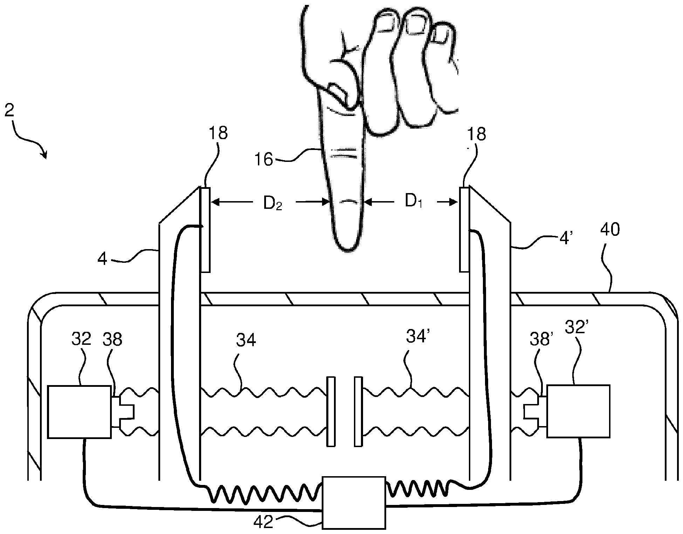

Fig. 4C illustrates a graph depicting the pressure P distribution along a line (row) of pressure sensing elements of the pressure sensor shown in Fig. 4B. It can be seen that in the central part of the graph, the pressure P exceeds a predefined upper pressure level P'. Accordingly, some of the pressure sensing sensor members detect a pressure that exceeds the predefined upper pressure level P'.

In one embodiment, contact is defined to occur when one or more of the pressure sensing sensor members detect a pressure that exceeds the predefined upper pressure level P'.

In another embodiment, contact is defined to occur when the average pressure detected by the pressure sensing sensor members exceeds the predefined upper pressure level P'.

In a further embodiment, contact is defined to occur when the average pressure detected by a predefined number (e.g. 10 or 20) of pressure sensing sensor members exceeds the predefined upper pressure level P'.

Fig. 5 illustrates a cross-sectional view of a gripping device 2 according to the invention. The gripping device 2 comprises a first gripping structure 4 that is rotatably attached to a first threaded rod 34. The gripping device 2 comprises a second gripping structure 4' rotatably attached to a second threaded rod 34'.

A first actuator formed as an electric motor 32 is coupled to the first threaded rod 34 by means of a first rod-shaped connection structure 38. A second actuator formed as an electric motor 32' is coupled to the second threaded rod 34' by means of a second rod-shaped connection structure 38'. Each of the electric motors 32, 32' are electrically connected to a control unit 42 by means of cables. In an alternative embodiment, the electric motors 32, 32' may be wirelessly connected to the control unit 42 and electrically connected to a power supply (e.g. a battery).

The control unit 42 is electrically connected to sensor members 18 provided at a surface of the gripping structures 4, 4'. In an alternative embodiment, the sensor members 18 may be wirelessly connected to the control unit 42.

The gripping device 2 comprises a housing 40. The gripping structures 4, 4' protrude from the housing 40 of the gripping device 2. A human finger 16 is arranged in the space between the gripping structures 4, 4' in

nonzero distances $D_1$, $D_2$ from each of the gripping structures 4, 4', respectively. When the gripping structures 4, 4' gradually are moved toward each other, the distances $D_1$, $D_2$ between the finger 16 and the griping structures 4, 4' will gradually decrease until there is contact between the finger 16 and one of the gripping structures 4, 4'.

When the gripping device 2 detects that there is contact with the finger 16 and the second gripping structure 4', this contact triggers the control unit 42 of the gripping device 2 to restrict the displacement of the the first gripping structure 4 relative to the second gripping structure 4'. In practice, the control unit 42 may control the electric motors 32, 32' in a first mode when no contact has been detected and in another mode, when contact has been detected.

In one embodiment, the contact between the finger 16 and one of the gripping structures 4, 4' is detected by using one or more sensor members 18.

In another embodiment, the contact between the finger 16 and one of the gripping structures 4, 4' is detected on the basis of measurement(s) of the current and/or voltage and/or power of at least one of the electric motors 32, 32'.

The gripping device 2 is operated in a manner, in which the distance $D_1$, $D_2$ between the finger 16 and the gripping structures 4, 4' is being restricted, when contact is detected. Accordingly, the gripping device 2 is configured to prevent the finger 16 from being injured by the compressive force exerted to the finger by the gripping structures 4, 4' or an object (not shown) and one of the gripping structures 4, 4'.

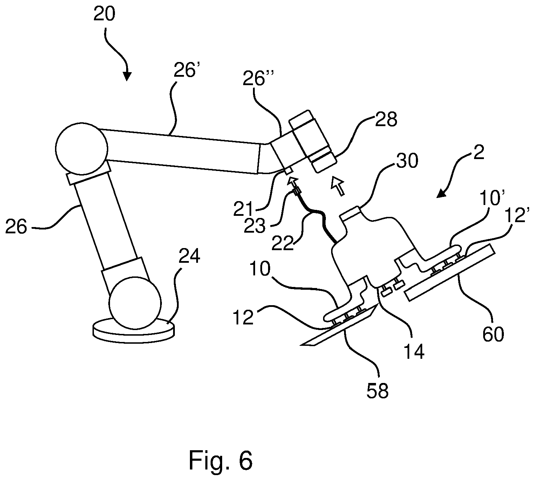

Fig. 6 illustrates a gripping device 2 according to the invention being attached to a collaborative robot 20. The robot 20 comprises a base 24 and a first arm 26 rotatably attached to said base 24. The robot 20 further comprises a second arm 26' rotatably attached to the first arm 26. The robot 20 moreover comprises a third arm 26" rotatably attached to the second arm 26'.

A first portion 28 is provided at the end of the third arm 26". The first portion 28 is configured to receive a corresponding second portion 30 attached to the gripping device 2.

The robot 20 comprises a socket 21 configured to receive a corresponding plug 23 of the gripping device 2 in order to electrically connect the gripping device 2 and the robot 20. The plug 23 is attached at the distal end of a cable 22 connected to the gripping device 2.

The gripping device 2 comprises a body portion and a plurality of extremities 10, 10' moveably attached to the body portion of the gripping device 2. The first extremity 10 is provided with a plurality of suction members 12 gripping a first object 58 by providing a negative pressure in the suction members 12.

The second extremity 10' is provided with a plurality of suction members 12' gripping a second object 60 by providing a negative pressure in the suction members 12'. The gripping device 2 comprises a centrally arranged support portion 14 provided with several suction members.

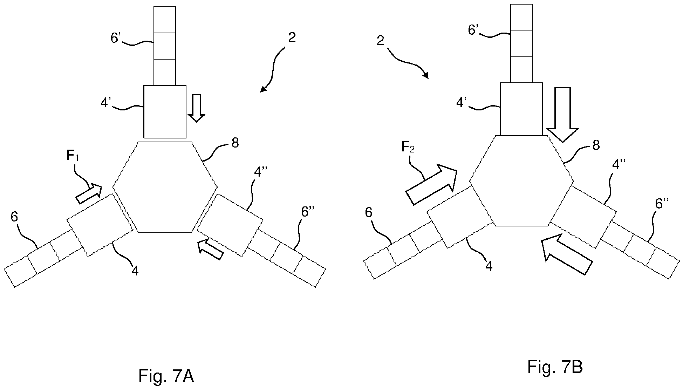

Fig. 7A illustrates a top view of a gripping device 2 according to the invention, wherein the gripping device 2 is operated in a non-contact mode (a mode in which the gripping structures 4, 4', 4" are not in contact with the object 8 to be handled). The gripping structures 4, 4', 4" are moved (by means of actuators which are not shown) towards the object 8 without restricting their relative displacement with respect to each other. The first gripping structure 4 is arranged in the distal end of a first connection member 6, the second gripping structure 4' is arranged in the distal end of a second connection member 6' and the third gripping structure 4" is arranged in the distal end of a third connection member 611.

The magnitude of the force $F_1$ applied to the gripping members 4, 4', 4" for mowing them towards the object 8 is indicated by arrows.

Fig. 7B illustrates a top view of the gripping device 2 shown in Fig. 7A, in a contact mode (a configuration in which contact has been detected between the object 8 and the gripping structures 4, 4', 4"). Since contact has been detected between the object 8 and the gripping structures 4, 4', 4", the control unit (not shown) is operated in a mode in which the one or more actuators (not shown) arranged to move the gripping structures 4, 4', 4" will restrict the displacement of at least one of the gripping structures 4, 4', 4" towards the object 8 so that the displacement is less than or equal to a predefined maximum displacement. Hereby, it is possible to avoid damage of a human tissue (e.g. a finger of a human) arranged between the gripping structures 4, 4', 4". It can be seen that the magnitude of the force $F_2$ applied to the gripping members 4, 4', 4" for pressing the them towards the object 8 is indicated by arrows. When comparing Fig. 7A and Fig. 7B it can be seen that $F_2$ is larger than $F_1$. Thus, in the contact mode, the force $F_2$ exerted by at least one of the gripping structures 4, 4', 4" to the object 8 is increased compared to the non-contact mode (shown in Fig. 7A).

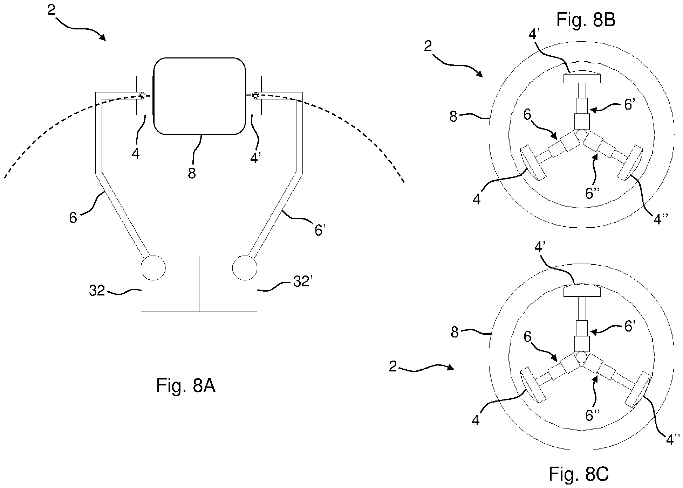

Fig. 8A illustrates a top view of a gripping device 2 according to the invention comprising two gripping structures 4, 4' each connected to a connection member 6, 6' that is rotatably attached to an actuator 32, 32'. The first gripping structure 4 is attached to a first connection member 6 being rotatably attached to a first actuator 32. The second gripping structure 4' is attached to a second connection member 6' that is rotatably attached to a second actuator 32. Accordingly, the first actuator 32 and the second actuator 32' can be operated independently of each other. The arced movement pattern of the first gripping structure 4 and the second gripping structure 4' is indicated with dashed lines.

The gripping structures 4, 4' are brought into contact with an object 8. The gripping device 2 comprises a detection unit (not shown) configured to detect when the object 8 is in contact with at least one of the gripping structures 4, 4'.

The gripping device 2 comprises a control unit (not shown) configured to control the actuators 32 32' and to restrict the displacement of at least one of the gripping structures 4, 4' towards the object 8 so that the displacement is less than or equal to a predefined maximum displacement. Hereby, damage of a human tissue (e.g. a finger of a human) arranged between the gripping structures 4, 4' can be avoided.

The control is configured to increase the force exerted by at least one of the gripping structures 4, 4' to the object 8 when the detection unit has detected that the at least one of the two or more gripping structures 4, 4' is in contact with the object 8. Hereby, it is possible to increase the normal force and thus the friction force and thus provide a firm grip of the object 8. In one embodiment, the predefined maximum displacement may be 0.1-0.3 mm, such as 0.2mm. In another embodiment, the predefined maximum displacement may be 0.4-0.6 mm such as 0.5 mm. In a further embodiment, the predefined maximum displacement may be 0.7-1.0 mm such as 0.8 mm.

Fig. 8B illustrates a top view of a gripping device 2 according to the invention comprising three gripping structures 4, 4', 4" each connected to a connection member 6, 6', 6" comprising a plurality of telescopic structures arranged to be translated with respect to each other. The gripping device 2 comprises a control unit (not shown) that is operated in a non-contact mode (in which there is no physical contact between the gripping structures 4, 4', 4" and the (inside surface of the) pipe-shaped object 8.

Fig. 8C illustrates the gripping device 2 shown in Fig. 8B in a configuration, in which a detection unit (not shown) of the gripping device 2 has detected contact between the object 8 and some of the gripping structures 4', 4". There is no contact between the last gripping structure 4 and the object 8. Accordingly, the control unit will regulate the one or more actuators (not shown) arranged to move the gripping structures 4, 4', 4" in such a manner that the displacement of the gripping structures 4', 4" being in contact with the object 8 is restricted (and thus kept below a predefined maximum allowable level).

In one embodiment, the control unit is configured to allow the gripping structure 4 to be moved towards the object 8 as long as no contact is detected between the gripping structure 4 and the object.

## List of reference numerals

| | |
|---|---|
| 2 | Gripping device |
| 4, 4' | Gripping structure |
| 6, 6' | Connection member |
| 8 | Object |
| 10, 10' | Extremity |
| 12, 12 | Suction member (e.g. suction disc) |
| 14 | Support portion |
| 16 | Body portion |
| 18, 18', 18" | Sensor member (e.g. a pressure sensor) |
| 20 | Robot |
| 21 | Socket |
| 22 | Cable |
| 23 | Plug |
| 24 | Base |
| 26, 26', 26" | Arm |
| 28 | Attachment structure |
| 30 | Attachment member |
| 32 | Actuator (e.g. electrical motor) |
| 34 | Threaded rod (worm shaft) |
| 38 | Connection structure |
| 40 | Housing |
| 42 | Control unit |
| 58 | Object |
| 60 | Object |
| F, $F_1$, $F_2$ | Force |
| P, P' | Pressure |
| D, $D_1$, $D_2$ | Distance |
| $\Delta D$ | Displacement |
| $\Delta D_{max}$ | Maximum displacement |
| F, $F_1$, $F_2$ | Force exerted by the gripping device |
| I | First phase |
| II | Second phase |

## Claims

1. A method for controlling a gripping device (2) for a robot (20) comprising:

   - two or more gripping structures (4, 4') movably arranged relative to each other and being configured to grip an object (8, 16), wherein the method comprises the step of actively restricting the displacement ($\Delta D$) of at least one of the two or more gripping structures (4, 4') so that said displacement ($\Delta D$) is less than or equal to a predefined maximum displacement ($\Delta D_{max}$), wherein the method comprises the step of:

      a) detecting when at least one of gripping structures (4, 4') is in contact with the object (8, 16) and
      b) increasing the force (F) exerted by at least one of the two or more gripping structures (4, 4') to the object (8, 18) from a predefined first level ($F_1$) to a predefined second level ($F_2$) when it has been detected that at least one of the two or more gripping structures (4, 4') is in contact with the object (8, 16);

      **characterised in that** the method further comprises the step of:

      c) detecting when at least one of gripping structures (4, 4') has been in contact with the object (8, 16) in a predefined time period and

d) only increasing the force (F) exerted by at least one of the two or more gripping structures (4, 4') to the object (8, 18) if at least one of the gripping structures (4, 4') has been in contact with the object (8, 16) in a time period being longer or equal to the predefined time period, wherein the predefined time period is at least 1ms.

2. A method according to claim 1, **characterised in that** the predefined maximum displacement ($\Delta D_{max}$) is less than 5 mm, preferably less than 2 mm such as less than 1 mm.

3. A method according to claim 1 or 2, **characterised in that** the ratio between the predefined second level ($F_2$) and the predefined first level ($F_1$) is at least 2.0.

4. A method according to claim 1 or 2, **characterised in that** the method comprises the step of increasing the force (F) from the predefined first level ($F_1$) to the predefined second level ($F_2$) linearly as function of the displacement of at least one of the two or more gripping structures.

5. A method according to one of the preceding claims, **characterised in that** the detection of when at least one of the gripping structures (4, 4') is in contact with the object (8, 16) is carried out by measuring a pressure (P) with which at least one of the two or more gripping structures (4, 4') presses against the object, wherein said pressure (P) is measured by means of a detection unit comprises one or more sensor members, wherein contact between the object (8, 16) and at least one of gripping structures (4, 4') is defined as when the pressure (P) exceeding a predefined pressure level (P') is detected.

6. A method according to one of the preceding claims, **characterised in that** the method comprises the step of initially letting the two or more gripping structures (4, 4') move without restricting their relative displacement ($\Delta D$) with respect to each other as long as none of the gripping structures (4, 4') are in contact with the object (8, 16).

7. A method according to one of the preceding claims, **characterised in that** the method comprises the step of controlling the magnitude of the pressure, with which at least one of the two or more gripping structures (4, 4') presses against the object (8, 16).

8. A method according to claim 4, **characterised in that** the method comprises the step of detecting at least one parameter indicative of the pressure or force with which at least one of the two or more gripping structures (4, 4') presses against the object (8, 18).

9. A method according to one of the preceding claims, **characterised in that** the method comprises the step of measuring a current and/or a voltage and/or a force of an actuator arranged to drive at least one of the two or more gripping structures (4, 4'), wherein the contact with an object (8, 16) is defined on the basis of the measured current and/or voltage and/or force.

10. A method according to one of the preceding claims, **characterised in that** the method comprises the step of applying one or more sensors to detect the the contact with the object (8, 16).

11. A gripping device (2) for a robot (20), said gripping device (2) comprising:

   - two or more gripping structures (4, 4') movably arranged relative to each other and being configured to grip an object (8, 16);
   - a detection unit configured to detect when an object (8, 16) is in contact with at least one of the two or more gripping structures (4, 4'),
   - one or more actuators (32, 32') configured to make at least one of the two or more gripping structures (4, 4') move to grip the object (8, 16),
   - a control unit (42) configured to control the one or more actuators (32, 32'),

   wherein the control unit (42) is configured to restrict the displacement ($\Delta D$) of at least one of the two or more gripping structures (4) so that said displacement ($\Delta D$) is less than or equal to a predefined maximum displacement ($\Delta D_{max}$), wherein the gripping device (2) is configured to increase the force (F) exerted by at least one of the two or more gripping structures (4, 4') to the object (8, 18) from a predefined first level ($F_1$) to a predefined second level ($F_2$) when the detection unit has been detected that at least one of the two or more gripping structures (4, 4') is in contact with the object (8, 16) **characterised in that** the detection unit is configured to detect when at least one of the gripping structures (4, 4') has been in contact with the object (8, 16) in a predefined time period, wherein the control unit (42) is configured to only increasing the force (F) exerted by at least one of the two or more gripping structures (4, 4') to the object (8, 18) if at least one of the gripping structures (4, 4') has been in contact with the object (8, 16) in a time period being longer or equal to the predefined time period, wherein predefined time period is at least 1ms.

12. A gripping device (2) according to claim 11, **characterised in that** the predefined maximum displacement ($\Delta D_{max}$) is less than 5 mm, preferably less than 2 mm, such as less than 1 mm.

13. A gripping device (2) according to claim 11 or 12, **characterised in that** the ratio between the predefined second level ($F_2$) and the predefined first level ($F_1$) is at least 2.0.

14. A gripping device (2) according to one of the preceding claims 11-13, **characterised in that** the gripping device (2) is configured to increase the force (F) from the predefined first level ($F_1$) to the predefined second level ($F_2$) linearly as function of the displacement of at least one of the two or more gripping structures (4, 4').

15. A gripping device (2) according to claim 11-14, **characterised in that** the gripping device (2) is configured to initially letting the two or more gripping structures (4, 4') move without restricting their relative displacement ($\Delta D$) with respect to each other as long as none of the gripping structures (4, 4') are in contact with the object (8, 16).

16. A gripping device (2) according to claim 11-15, **characterised in that** the gripping device (2) is configured to control the magnitude of the pressure, with which at least one of the two or more gripping structures (4, 4') presses against the object (8, 16).

17. A gripping device (2) according to claim 11-16, **characterised in that** the gripping device (2) is configured to measure a current and/or a voltage and/or a force of an actuator arranged to drive at least one of the two or more gripping structures (4, 4'), wherein the contact with an object (8, 16) is defined on the basis of the measured current and/or voltage and/or force.

18. A gripping device (2) according to one of the claims 11-17, **characterised in that** the gripping device (2) comprises an integrated detection unit configured to detect when the object (8, 16) is in contact with at least one of the two or more gripping structures (4, 4') on the basis of measurements performed on one or more of the actuators (32, 32') and that the control unit (42) is configured to restrict the displacement ($\Delta D$) of at least one of the two or more gripping structures (4) when the integrated detection unit has detected that the object (8, 16) is in contact with at least one of the two or more gripping structures (4, 4').

19. A gripping device (2) according to one of the preceding claims 11-18, **characterised in that** the detection unit comprises one or more sensor members (18, 18', 18").

**Patentansprüche**

1. Verfahren zum Steuern einer Greifvorrichtung (2) für einen Roboter (20), umfassend:

   - zwei oder mehr Greifstrukturen (4, 4'), die beweglich relativ zueinander angeordnet sind und konfiguriert sind, um ein Objekt (8, 16) zu greifen,

   wobei das Verfahren den Schritt des aktiven Einschränkens der Verschiebung ($\Delta D$) von mindestens einer der zwei oder mehreren Greifstrukturen (4, 4') umfasst, sodass die Verschiebung ($\Delta D$) weniger als oder gleich wie eine vordefinierte maximale Verschiebung ($\Delta D_{max}$) ist, wobei das Verfahren den folgenden Schritt umfasst:

   a) Erfassen, wann mindestens eine der Greifstrukturen (4, 4') in Kontakt mit dem Objekt (8, 16) ist, und
   b) Erhöhen der Kraft (F), die von mindestens einer der zwei oder mehreren Greifstrukturen (4, 4') auf das Objekt (8, 18) ausgeübt wird, von einem vordefinierten ersten Niveau ($F_1$) auf ein vordefiniertes zweites Niveau ($F_2$), wenn erfasst wurde, dass mindestens eine der zwei oder mehreren Greifstrukturen (4, 4') in Kontakt mit dem Objekt (8, 16) ist;

   **dadurch gekennzeichnet, dass** das Verfahren ferner den folgenden Schritt umfasst:

   c) Erfassen, wann mindestens eine der Greifstrukturen (4, 4') in einem vordefinierten Zeitraum in Kontakt mit dem Objekt (8, 16) war, und
   d) nur Erhöhen der Kraft (F), die von mindestens einer der zwei oder mehreren Greifstrukturen (4, 4') auf das Objekt (8, 18) ausgeübt wird, wenn mindestens eine der Greifstrukturen (4, 4') in einem Zeitraum in Kontakt mit dem Objekt (8, 16) war, der länger als oder gleich wie der vordefinierte Zeitraum ist, wobei der vordefinierte Zeitraum mindestens 1 ms ist.

2. Verfahren nach Anspruch 1, **dadurch gekennzeichnet, dass** die vordefinierte maximale Verschiebung ($\Delta D_{max}$) weniger als 5 mm, bevorzugt weniger als 2 mm, wie z. B. weniger als 1 mm ist.

3. Verfahren nach Anspruch 1 oder 2, **dadurch gekennzeichnet, dass** das Verhältnis zwischen dem vordefinierten zweiten Niveau ($F_2$) und dem vordefinierten ersten Niveau ($F_1$) mindestens 2,0 ist.

4. Verfahren nach Anspruch 1 oder 2, **dadurch gekennzeichnet, dass** das Verfahren den Schritt des Erhöhens der Kraft (F) vom vordefinierten ersten Ni-

veau ($F_1$) zum vordefinierten zweiten Niveau ($F_2$) linear als Funktion der Verschiebung von mindestens einer der zwei oder mehreren Greifstrukturen umfasst.

5. Verfahren nach einem der vorhergehenden Ansprüche, **dadurch gekennzeichnet, dass** die Erfassung davon, wann mindestens eine der Greifstrukturen (4, 4') in Kontakt mit dem Objekt (8, 16) ist, ausgeführt wird durch Messen eines Drucks (P), mit dem mindestens eine der zwei oder mehreren Greifstrukturen (4, 4') gegen das Objekt drückt, wobei der Druck (P) durch eine Erfassungseinheit gemessen wird, umfasst ein oder mehrere Sensorelemente, wobei Kontakt zwischen dem Objekt (8, 16) und mindestens einer der Greifstrukturen (4, 4') definiert ist als wenn erfasst wird, dass der Druck (P) ein vordefiniertes Druckniveau (P') übersteigt.

6. Verfahren nach einem der vorhergehenden Ansprüche, **dadurch gekennzeichnet, dass** das Verfahren den Schritt umfasst, in dem die zwei oder mehreren Greifstrukturen (4, 4') sich bewegen gelassen werden, ohne deren relative Verschiebung ($\Delta D$) in Bezug zueinander einzuschränken, solange keine der Greifstrukturen (4, 4') in Kontakt mit dem Objekt (8, 16) ist.

7. Verfahren nach einem der vorhergehenden Ansprüche, **dadurch gekennzeichnet, dass** das Verfahren den Schritt des Steuerns der Größe des Drucks umfasst, mit dem mindestens eine der zwei oder mehreren Greifstrukturen (4, 4') gegen das Objekt (8, 16) drückt.

8. Verfahren nach Anspruch 4, **dadurch gekennzeichnet, dass** das Verfahren den Schritt des Erfassens von mindestens einem Parameter umfasst, der den Druck oder die Kraft angibt, mit dem/der mindestens eine der zwei oder mehreren Greifstrukturen (4, 4') gegen das Objekt (8, 18) drückt.

9. Verfahren nach einem der vorhergehenden Ansprüche, **dadurch gekennzeichnet, dass** das Verfahren den Schritt des Messens eines Stroms und/oder einer Spannung und/oder einer Kraft eines Aktors umfasst, der angeordnet ist, um mindestens eine der zwei oder mehreren Greifstrukturen (4, 4') anzutreiben, wobei der Kontakt mit einem Objekt (8, 16) basierend auf dem/der gemessenen Strom und/oder Spannung und/oder Kraft definiert ist.

10. Verfahren nach einem der vorhergehenden Ansprüche, **dadurch gekennzeichnet, dass** das Verfahren den Schritt des Anwendens von einem oder mehreren Sensoren umfasst, um den Kontakt mit dem Objekt (8, 16) zu erfassen.

11. Greifvorrichtung (2) für einen Roboter (20), wobei die Greifvorrichtung (2) Folgendes umfasst:

    - zwei oder mehr Greifstrukturen (4, 4'), die beweglich relativ zueinander angeordnet sind und konfiguriert sind, um ein Objekt (8, 16) zu greifen;
    - eine Erfassungseinheit, die konfiguriert ist, um zu erfassen, wenn ein Objekt (8, 16) in Kontakt mit mindestens einer der zwei oder mehreren Greifstrukturen (4, 4') ist,
    - einen oder mehrere Aktoren (32, 32'), die konfiguriert sind, um mindestens eine der zwei oder mehreren Greifstrukturen (4, 4') dazu zu bringen, sich zu bewegen, um das Objekt (8, 16) zu greifen,
    - eine Steuereinheit (42), die konfiguriert ist, um den einen oder die mehreren Aktoren (32, 32') zu steuern,

wobei die Steuereinheit (42) konfiguriert ist, um die Verschiebung ($\Delta D$) von mindestens einer der zwei oder mehreren Greifstrukturen (4) einzuschränken, sodass die Verschiebung ($\Delta D$) weniger als oder gleich wie eine vordefinierte maximale Verschiebung ($\Delta D_{max}$) ist, wobei die Greifvorrichtung (2) konfiguriert ist, um die Kraft (F), die von mindestens einer der zwei oder mehreren Greifstrukturen (4, 4') auf das Objekt (8, 18) ausgeübt wird, von einem vordefinierten ersten Niveau ($F_1$) auf ein vordefiniertes zweites Niveau ($F_2$) zu erhöhen, wenn die Erfassungseinheit erfasst hat, dass mindestens eine der zwei oder mehreren Greifstrukturen (4, 4') in Kontakt mit dem Objekt (8, 16) ist, **dadurch gekennzeichnet, dass** die Erfassungseinheit konfiguriert ist, um zu erfassen, wann mindestens eine der Greifstrukturen (4, 4') in einem vordefinierten Zeitraum in Kontakt mit dem Objekt (8, 16) war, wobei die Steuereinheit (42) konfiguriert ist, um die Kraft (F), die von mindestens einer der zwei oder mehreren Greifstrukturen (4, 4') auf das Objekt (8, 18) ausgeübt wird, zu erhöhen, wenn mindestens eine der Greifstrukturen (4, 4') in einem Zeitraum in Kontakt mit dem Objekt (8, 16) war, der länger als oder gleich wie der vordefinierte Zeitraum ist, wobei der vordefinierte Zeitraum mindestens 1 ms ist.

12. Greifvorrichtung (2) nach Anspruch 11, **dadurch gekennzeichnet, dass** die vordefinierte maximale Verschiebung ($\Delta D_{max}$) weniger als 5 mm, bevorzugt weniger als 2 mm, wie z. B. weniger als 1 mm ist.

13. Greifvorrichtung (2) nach Anspruch 11 oder 12, **dadurch gekennzeichnet, dass** das Verhältnis zwischen dem vordefinierten zweiten Niveau ($F_2$) und dem vordefinierten ersten Niveau ($F_1$) mindestens 2,0 ist.

**14.** Greifvorrichtung (2) nach einem der vorhergehenden Ansprüche 11-13, **dadurch gekennzeichnet, dass** die Greifvorrichtung (2) konfiguriert ist, um die Kraft (F) vom vordefinierten ersten Niveau ($F_1$) zum vordefinierten zweiten Niveau ($F_2$) linear als Funktion der Verschiebung von mindestens einer der zwei oder mehreren Greifstrukturen (4, 4') zu erhöhen.

**15.** Greifvorrichtung (2) nach Anspruch 11-14, **dadurch gekennzeichnet, dass** die Greifvorrichtung (2) konfiguriert ist, um anfänglich die zwei oder mehreren Greifstrukturen (4, 4') sich bewegen zu lassen, ohne deren relative Verschiebung ($\Delta D$) in Bezug zueinander einzuschränken, solange keine der Greifstrukturen (4, 4') in Kontakt mit dem Objekt (8, 16) ist.

**16.** Greifvorrichtung (2) nach Anspruch 11-15, **dadurch gekennzeichnet, dass** die Greifvorrichtung (2) konfiguriert ist, um die Größe des Drucks, mit dem mindestens eine der zwei oder mehreren Greifstrukturen (4, 4') gegen das Objekt (8, 16) drückt, zu steuern.

**17.** Greifvorrichtung (2) nach Anspruch 11-16, **dadurch gekennzeichnet, dass** die Greifvorrichtung (2) konfiguriert ist, um einen Strom und/oder eine Spannung und/oder eine Kraft eines Aktors zu messen, der angeordnet ist, um mindestens eine der zwei oder mehreren Greifstrukturen (4, 4') anzutreiben, wobei der Kontakt mit einem Objekt (8, 16) basierend auf dem/der gemessenen Strom und/oder Spannung und/oder Kraft definiert ist.

**18.** Greifvorrichtung (2) nach einem der Ansprüche 11-17, **dadurch gekennzeichnet, dass** die Greifvorrichtung (2) eine integrierte Erfassungseinheit umfasst, die konfiguriert ist, um zu erfassen, wenn das Objekt (8, 16) in Kontakt mit mindestens einer der zwei oder mehreren Greifstrukturen (4, 4') ist, basierend auf Messungen, die an einem oder mehreren der Aktoren (32, 32') durchgeführt werden, und dass die Steuereinheit (42) konfiguriert ist, um die Verschiebung ($\Delta D$) von mindestens einer der zwei oder mehreren Greifstrukturen (4) einzuschränken, wenn die integrierte Erfassungseinheit erfasst hat, dass das Objekt (8, 16) in Kontakt mit mindestens einer der zwei oder mehreren Greifstrukturen (4, 4') ist.

**19.** Greifvorrichtung (2) nach einem der vorhergehenden Ansprüche 11-18, **dadurch gekennzeichnet, dass** die Erfassungseinheit ein oder mehrere Sensorelemente (18, 18', 18") umfasst.

**Revendications**

**1.** Procédé de commande d'un dispositif de préhension (2) pour robot (20) comprenant :

- deux ou plusieurs structures de préhension (4, 4') agencées de manière mobile les unes par rapport aux autres et configurées pour saisir un objet (8, 16),

dans lequel le procédé comprend l'étape consistant à restreindre activement le déplacement ($\Delta D$) d'au moins l'une des deux ou plusieurs structures de préhension (4, 4') de sorte que ledit déplacement ($\Delta D$) soit inférieur ou égal à un déplacement maximal prédéfini ($\Delta D_{max}$), dans lequel le procédé comprend l'étape consistant à :

a) détecter lorsqu'au moins une des structures de préhension (4, 4') est en contact avec l'objet (8, 16) et
b) augmenter la force (F) exercée par au moins une des deux ou plusieurs structures de préhension (4, 4') sur l'objet (8, 18) d'un premier niveau prédéfini ($F_1$) à un deuxième niveau prédéfini ($F_2$) lorsqu'il a été détecté qu'au moins une des deux ou plusieurs structures de préhension (4, 4') est en contact avec l'objet (8, 16) ;

**caractérisé en ce que** le procédé comprend en outre l'étape consistant à :

c) détecter quand au moins une des structures de préhension (4, 4') a été en contact avec l'objet (8, 16) dans une période de temps prédéfinie et
d) n'augmenter la force (F) exercée par au moins une des deux ou plusieurs structures de préhension (4, 4') sur l'objet (8, 18) que si au moins une des structures de préhension (4, 4') a été en contact avec l'objet (8, 16) pendant une durée supérieure ou égale à la durée prédéfinie, la durée prédéfinie étant d'au moins 1 ms.

**2.** Procédé selon la revendication 1, **caractérisé en ce que** le déplacement maximal prédéfini ($\Delta D_{max}$) est inférieur à 5 mm, de préférence inférieur à 2 mm tel qu'inférieur à 1 mm.

**3.** Procédé selon la revendication 1 ou 2, **caractérisé en ce que** le rapport du deuxième niveau prédéfini ($F_2$) par rapport au premier niveau prédéfini ($F_1$) est d'au moins 2,0.

**4.** Procédé selon la revendication 1 ou 2, **caractérisé en ce que** le procédé comprend l'étape consistant à augmenter la force (F) du premier niveau prédéfini ($F_1$) au deuxième niveau prédéfini ($F_2$) de manière linéaire en fonction du déplacement d'au moins l'une des deux ou plusieurs structures de préhension.

**5.** Procédé selon l'une des revendications précédentes, **caractérisé en ce que** la détection du moment où au moins une des structures de préhension (4, 4') est en contact avec l'objet (8, 16) est réalisée par mesure d'une pression (P) avec laquelle au moins une des deux ou plusieurs structures de préhension (4, 4') appuie contre l'objet, dans lequel ladite pression (P) est mesurée au moyen d'une unité de détection comprenant un ou plusieurs éléments capteurs, dans lequel le contact entre l'objet (8, 16) et au moins l'une des structures de préhension (4, 4') est défini comme contact lorsque la pression (P) dépassant un niveau de pression prédéfini (P') est détectée.

6. Procédé selon l'une des revendications précédentes, **caractérisé en ce que** le procédé comprend l'étape consistant à laisser initialement les deux ou plusieurs structures de préhension (4, 4') se déplacer sans restreindre leur déplacement relatif (ΔD) les unes par rapport aux autres tant qu'aucune des structures de préhension (4, 4') n'est en contact avec l'objet (8, 16).

7. Procédé selon l'une des revendications précédentes, **caractérisé en ce que** le procédé comprend l'étape consistant à contrôler l'amplitude de la pression avec laquelle au moins l'une des deux ou plusieurs structures de préhension (4, 4') appuie contre l'objet (8, 16).

8. Procédé selon la revendication 4, **caractérisé en ce que** le procédé comprend l'étape de détection d'au moins un paramètre indicatif de la pression ou de la force avec laquelle au moins l'une des deux ou plusieurs structures de préhension (4, 4') appuie contre l'objet (8, 18).

9. Procédé selon l'une des revendications précédentes, **caractérisé en ce que** le procédé comprend l'étape consistant à mesurer un courant et/ou une tension et/ou une force d'un actionneur agencé pour entraîner au moins l'une des deux ou plusieurs structures de préhension. (4, 4'), dans lequel le contact avec un objet (8, 16) est défini sur la base du courant et/ou de la tension et/ou de la force mesurés.

10. Procédé selon l'une des revendications précédentes, **caractérisé en ce que** le procédé comprend l'étape consistant à appliquer un ou plusieurs capteurs pour détecter le contact avec l'objet (8, 16).

11. Dispositif de préhension (2) pour robot (20), ledit dispositif de préhension (2) comprenant :

   - deux ou plusieurs structures de préhension (4, 4') disposées de manière mobile les unes par rapport aux autres et configurées pour saisir un objet (8, 16) ;
   - une unité de détection configurée pour détecter lorsqu'un objet (8, 16) est en contact avec au moins l'une des deux ou plusieurs structures de préhension (4, 4'),
   - un ou plusieurs actionneurs (32, 32') configurés pour déplacer au moins une des deux ou plusieurs structures de préhension (4, 4') pour saisir l'objet (8, 16),
   - une unité de commande (42) configurée pour commander l'un ou plusieurs actionneurs (32, 32'),

dans lequel l'unité de commande (42) est configurée pour limiter le déplacement (ΔD) d'au moins l'une des deux ou plusieurs structures de préhension (4) de sorte que ledit déplacement (ΔD) soit inférieur ou égal à un déplacement maximal prédéfini (ΔD$_{max}$), dans lequel le dispositif de préhension (2) est configuré pour augmenter la force (F) exercée par au moins une des deux ou plusieurs structures de préhension (4, 4') sur l'objet (8, 18) à partir d'un premier niveau prédéfini (F$_1$) à un deuxième niveau prédéfini (F$_2$) lorsque l'unité de détection a détecté qu'au moins une des deux ou plusieurs structures de préhension (4, 4') est en contact avec l'objet (8, 16) **caractérisé en ce que** l'unité de détection est configurée pour détecter lorsqu'au moins une des structures de préhension (4, 4') a été en contact avec l'objet (8, 16) dans une période de temps prédéfinie, dans lequel l'unité de commande (42) est configurée pour uniquement augmenter la force (F) exercée par au moins une des deux ou plusieurs structures de préhension (4, 4') sur l'objet (8, 18) si au moins une des structures de préhension (4, 4') a été en contact avec l'objet (8, 16) dans une période de temps étant supérieure ou égale à la période de temps prédéfinie, la période de temps prédéfinie étant d'au moins 1 ms.

12. Dispositif de préhension (2) selon la revendication 11, **caractérisé en ce que** le déplacement maximal prédéfini (ΔD$_{max}$) est inférieur à 5 mm, de préférence inférieur à 2 mm, tel qu'inférieur à 1 mm.

13. Dispositif de préhension (2) selon la revendication 11 ou 12, **caractérisé en ce que** le rapport du deuxième niveau prédéfini (F$_2$) par rapport au premier niveau prédéfini (F$_1$) est d'au moins 2,0.

14. Dispositif de préhension (2) selon l'une des revendications précédentes 11 à 13, **caractérisé en ce que** le dispositif de préhension (2) est configuré pour augmenter la force (F) du premier niveau prédéfini (F$_1$) au deuxième niveau prédéfini (F$_2$) de manière linéaire en fonction du déplacement d'au moins une des deux ou plusieurs structures de préhension (4, 4').

15. Dispositif de préhension (2) selon les revendications 11 à 14, **caractérisé en ce que** le dispositif de préhension (2) est configuré pour laisser initialement les deux ou plusieurs structures de préhension (4, 4') se déplacer sans restreindre leur déplacement relatif ($\Delta D$) les unes par rapport aux autres tant qu'aucune des structures de préhension (4, 4') n'est en contact avec l'objet (8, 16).

16. Dispositif de préhension (2) selon les revendications 11 à 15, **caractérisé en ce que** le dispositif de préhension (2) est configuré pour contrôler l'amplitude de la pression, avec laquelle au moins l'une des deux ou plusieurs structures de préhension (4, 4 ') appuie contre l'objet (8, 16).

17. Dispositif de préhension (2) selon les revendications 11 à 16, **caractérisé en ce que** le dispositif de préhension (2) est configuré pour mesurer un courant et/ou une tension et/ou une force d'un actionneur agencé pour entraîner au moins l'une des deux ou plusieurs structures de préhension (4, 4'), le contact avec un objet (8, 16) étant défini sur la base du courant et/ou de la tension et/ou de la force mesurés.

18. Dispositif de préhension (2) selon l'une des revendications 11 à 17, **caractérisé en ce que** le dispositif de préhension (2) comprend une unité de détection intégrée configurée pour détecter lorsque l'objet (8,16) est en contact avec au moins une des deux ou plusieurs structures de préhension (4, 4') sur la base de mesures effectuées sur un ou plusieurs des actionneurs (32, 32') et **en ce que** l'unité de commande (42) est configurée pour limiter le déplacement ($\Delta D$) d'au moins une des deux ou plusieurs structures de préhension (4) lorsque l'unité de détection intégrée a détecté que l'objet (8, 16) est en contact avec au moins une des deux ou plusieurs structures de préhension (4, 4').

19. Dispositif de préhension (2) selon l'une des revendications précédentes 11 à 18, **caractérisé en ce que** l'unité de détection comprend un ou plusieurs éléments capteurs (18, 18', 18").

Fig. 1A

Fig. 1B

Fig. 1C

Fig. 3A

Fig. 3B

Fig. 4A

Fig. 4B

Fig. 4C

Fig. 6

Fig. 7A

Fig. 7B

Fig. 8A

Fig. 8B

Fig. 8C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09225881 A
- DE 3632151 A1
- DE 102016111173 A1